# EUROPEAN PATENT APPLICATION

(11) **EP 1 415 546 A1**
(43) Date of publication of application: **06.05.2004**
(21) Application number: 02755758.6
(22) Date of filing: 01.08.2002
(51) Int. Cl.: A23L 1/325

(54) **FROZEN PRODUCT OF UNLEACHED OR LITTLE LEACHED MINCED FISH MEAT**

(30) Priority: 06.08.2001 JP 2001237368
(71) Applicant: NIPPON SUISAN KAISHA, LTD., Tokyo 100-8686 (JP)
(72) Inventor: dMIZUGUCHI, Toru, Nippon Suisan Kaisha, Ltd., Hacjopko-shi, Tokyo 192-0906 (JP); OKITA, Takaaki, Nippon Suisan Kaisha, Ltd., Hachioji-shi, Tokyo 192-0906 (JP); MORI, Takashi, ppon Suisan Kaisha, Ltd., Hachioji-shi, Tokyo 192-0906 (JP); ONUKI, Hiroyuki, Nippon Suisan Kaisha, Ltd., Hachioji-shi, Tokyo 192-0906 (JP)
(74) Representative: Leson, Thomas Johannes Alois, Dipl.-Ing.
(86) International application number: PCT/JP2002/007866
(87) International publication number: WO 2003/013280

(57) **Abstract**

Providing a frozen non-water-washed or water-washed at low level fish meat with suppressed freezing denaturation, from a fish species generally never used without water-wash.

Biological iron, iron-containing substances and/or biological reducing substances in the fish meat are oxidized. A frozen non-water-washed or water-washed at low level fish meat made from minced fish meat or the dehydrated minced fish meat, where one or more cryoprotectants have been added and the decomposition of trimethylamine-N-oxide is suppressed through oxidation. Preferably, the fishmeat is put in contact to oxygen under agitation of the fish meat, to thereby suppress trimethylamine-N-oxide decomposition, to which are added cryoprotectants for freezing. A frozen product of non-water-washed or water-washed at low level fish meat, where salts have been added for such agitation, followed by agitation. A fish paste product from the frozen product as the raw material.

## Description

### Technical Field

The present invention relates to a frozen non-water-washed or water-washed at low level minced fish meat whose protein denaturation is suppressed prepared by adding cryoprotectants to fish meat processed into a minced form (referred to as minced fish meat hereinafter) or the dehydrated meat thereof and oxidizing the fish meat with oxygen or an oxidant or the. In accordance with the invention, the term low level water-wash means light water-wash in water at a level such that the same properties of non-water-washed fish meat may substantially be retained. In more detail, the invention relates to a frozen non-water-washed or water-washed at low level fish meat usable as a frozen raw material for fish paste products, as prepared by using a combination of a technique of suppressing the decomposition of trimethylamine-N-oxide (also referred to as "TMAO" hereinafter) through fish meat oxidation and an additive suppressing the modification of proteins per se under freezing.

### Background of the Invention

Various modes of fish meat storage and marketing exist, including storage in ice, freezing and drying. From the respect of the possibility of long-term storage and long-distance transfer, freezing is excellent. Fish meat products which can be stored under freezing include raw material forms at low processed levels, such as round, fillet, and fish meat with shell. These are processed into steak shapes, stick shapes, slice shapes, or stripped shapes, and are then coated with batter and the like, for use as frozen foods. The quality deterioration of such raw material fish meat at a low processed level can be delayed during storage under freezing, when the meat is freezing processed while the meat is still highly fresh.

Alternatively, most of fish species which can be caught at a large scale and involve much difficulty when used as they are, are currently used as frozen surimi (water-washed fish meat paste). In other words, fish meat prepared into minced form is then twice or three times water-washed in water, followed by filtration and dehydration with a screw press, to which is added an agent preventing freezing modification to freeze the fish meat to prepare frozen surimi for marketing under freezing for worldwide use as a raw material of fish paste products such as crab meat-like fish paste meat, grilled or boiled fish paste cake in the form of bamboo shoot, deep-fried fish paste cake, boiled fish paste cake, fish meat sausage and hamburger, and fish ball. Simple minced fish meat without any process of water-wash is referred to as minced fish meat(otoshimi) or non-water-washed fish meat and is at very poor storability under freezing. This is ascribed to nuisance components contained in the muscle, for example components accelerating lipid oxidation and protein deterioration, such as lipid and blood, and TMAO generating formaldehyde (referred to as "FA" hereinafter) and dimethylamine (referred to as "DMA" hereinafter). Therefore, non-water-washed fish meat as a frozen raw material for paste products has not yet been on market.

In the Surimi (water-washed fish paste) industry, water-soluble protein discharged from the process of water-wash and dehydration is not yet sufficiently used despite the considerable amount thereof, resulting in the loss of animal protein and the consumption of various energies such as power energy required for water disposal, power energy required for water-wash process, and production energy for pure water to be used therefor. A technique overcoming such loss of animal protein and energy waste has been demanded strongly so far. However, disappointedly, no satisfactory outcome has been yielded yet.

When fish species containing a high content of TMAO, such as Theragra chalcogram (Pollack), Micromesistius australis (Southern blue whiting) and Macruronus magellanicus (Hoki), are used in the form of non-water-washed fish meat, the hardening of the meat and the insolubility of the protein in salt rapidly progress during storage under freezing, even when cryoprotectants is added to the fish species followed by rapid freezing process. Due to the generation of fishy smell, furthermore, the commercial value is completely lost. The main cause thereof is that FA generated from the decomposition of TMAO contained in fish meat promotes the crosslinking reaction among proteins, causing the hardening of the meat and the insolubility thereof in salt and that DMA generated at an equal molar amount to that of FA via TMAO decomposition has fishy smell.

For storage of these fish species at high TMAO contents under freezing, there is no other way, except for TMAO removal with water-wash to prepare frozen fish paste. Generally, about 80 % of the original content of TMAO in fish species can be removed by water-wash.

### Disclosure of the Invention

It is an object of the invention to provide a frozen product of non-water-washed or water-washed at low level fish meat, which can be used as a frozen raw material for paste products because denaturation of the fish meat under freezing can be suppressed, in spite of the fact that frozen product of fish meat is prepared from a raw material non-water-washed fish meat. In other words, it is an object of the invention to provide non-water-washed fish meat with high storability under freezing, so as to utilize fish meat protein effectively at maximum, promote production energy saving and sufficientlyutilize the flavor characteristic of fish meat.

The object of the invention is to provide a frozen product of non-water-washed or water-washed at low level fish meat of fish species generally never usable without water-wash, where freezing denaturation is suppressed.

In summary, the invention relates to a frozen product of non-water-washed or water-washed at low level fish meat from a raw material minced fish meat or the dehydrated meat of minced fish meat, to which are added one or more cryoprotectants and where the decomposition of trimethylamine-N-oxide is suppressed through oxidation.

In summary, preferably, the invention relates to a frozen product of non-water-washed or water-washed at low level fish meat from a raw material minced fish meat or the dehydrated meat thereof, which is prepared by adding one or more cryoprotectants to the raw material fish meat, and agitating the resulting fish meat to put the fish meat in contact to air or oxygen to suppress the decomposition of trimethylamine-N-oxide followed by freezing. In summary, the invention also relates to a frozen product of non-water-washed or water-washed at low level fish meat, which is prepared by adding salts to the raw material fish meat during agitation. In accordance with the invention, the term oxidation of fish meat specifically means oxidation of biological iron, iron-containing substances and/or biological reducing substances.

As the cryoprotectant in accordance with the invention, preferably, use is made of sugar and/or sugar alcohol, or sugar and/or sugar alcohol, and sweet sake (mirin), or an agent suppressing the decomposition of trimethylamine-N-oxide. When fish meat is diluted with addition of water or food materials, the inventive action of preventing freezing denaturation can be enhanced.

In summary, the invention relates to a paste product made from a frozen product of non-water-washed or water-washed at low level fish meat which is made from a raw material minced fish meat or the dehydrated meat of minced fish meat, to which are added one or more cryoprotectants and where the decomposition of trimethylamine-N-oxide is suppressed through oxidation.

### Brief Description of the Drawings

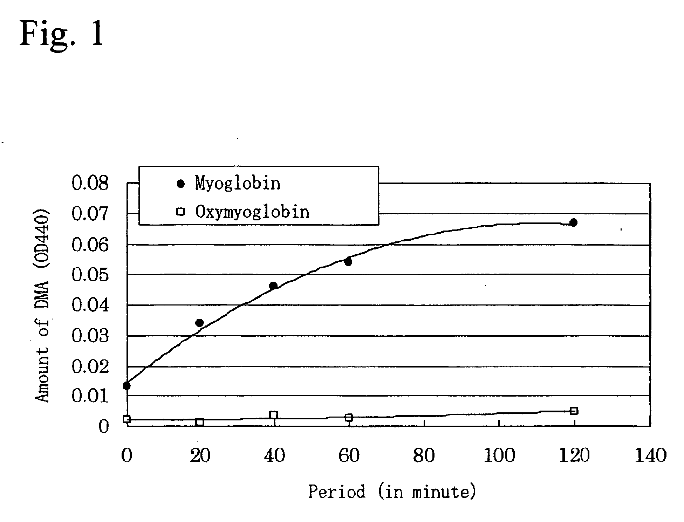

Fig. 1 shows graph depicting that myoglobin as a biological iron-containing substance decomposed TMAO while oxymyoglobin in the oxygenized form never decomposed TMAO.

### Best Mode for Carrying out the Invention

Entire fish and shellfish species containing TMAO are subjects to be used as raw material fish meat. Particularly, fish meat containing TMAO in the meat and being decomposed to generate FA during storage under freezing is the subject.

All fish species containing only a trace amount of TMAO could be also subjects. The advantage of the invention can be exerted for fish species of high contents of TMAO, which are generally never used without water-wash process and include for example Theragra chalcogram, Micromesistius australis, and Macruronus magellanicus.

In accordance with the invention, fish and shellfish species which can generally never be stored under freezing without water-wash can be provided in the form of frozen products of non-water-washed or water-washed at low level, a substantially non-water-washed level, fish meat where the freezing denaturation is suppressed. Non-water-washed or water-washed at low level fish meat means fishmeat at a content of water-soluble substances of 30 to 100 %, compared with the content thereof in the raw material fish meat. For example, minced fish meat at a water content of 83 to 85 % per se can be used as the raw material. Otherwise, dehydrated fish meat, namely minced fish meat which is dehydrated from approximately a water content of 84 % to a water content of 82 % or less, can be used. Depending on the purpose, fish meat water-washed at a low level can be used as well. In general frozen surimi, water-soluble substances are removed to the level of at least below 25 to 30 % of the raw material.

Because the freezing resistance of surimi has been considered to be lowered unless water-soluble substances are sufficiently removed, generally, water-soluble substances are removed to the level of below 20 % therein. At most, the residual amount of water-soluble substances was never more than about 25 to 30 %. In accordance with the invention, the freezing denaturation can be suppressed even at a residual amount of water-soluble substances above 30 %. A paste product sufficiently keeping natural fish taste can be produced by using such frozen product of a residual amount of water-soluble substances above 50 %.

As the cryoprotectant, use is made of one or more selected from the group consisting of sugar, sugar alcohol, and sweet sake. The types of sugar and sugar alcohol to be used include but are not limited to for example sucrose, sorbitol, trehalose, glucose, xylitol, mannitol, xylose, sorbitan, fructose, and maltose.

Sugar or sugar alcohol is added at an amount of 1 to 20 %, preferably 5 to 15 % to fish meat defined 100 %, while sweet sake is added at an amount of 0.01 to 5 %, preferably 0.1 % to 3 %.

During the production of frozen surimi, the addition of sugar and polyphosphate salts involves agitation. The agitation is simply done for uniformly blending together auxiliary raw materials. So as to suppress TMAO decomposition through oxidation in accordance with the invention, fish meat is agitated in a gas containing oxygen with a silent cutter, for example, for 5 minutes or more to 30 minutes or less, preferably 5 to 20 minutes, resulting in a sufficient effect. The duration of such agitation is adjusted, depending on the performance and capacity of an agitation unit. Because an unpreferable influence may occur in the resulting fish meat due to exothermic agitation, it is necessarily examined whether or not cooling should be done. Further, oxidation canbedone by various methods including agitation with a high kneader or a continuous agitator, purging of a gas containing oxygen, and addition of an oxygen-generating agent or an oxidant for agitation.

Main iron-containing substances in muscle include for example hemoglobin and myoglobin. The physiological functions of hemoglobin and myoglobin are the transfer and storage of molecular oxygen. The binding of molecular oxygen with these hemoglobin and myoglobin is referred to as oxidation or oxygenation.

Further, iron in muscle exists in the form of heme iron such as hemoglobin and myoglobin and additionally exists in the form of non-heme iron. The modification of such non-heme iron from divalent iron (Fe²⁺) to trivalent iron (Fe³⁺) is also referred to as oxidation.

In accordance with the invention, oxygen binding to hemoglobin and myoglobin to oxidize them and modification of divalent iron into trivalent iron, namely oxidation can suppress TMAO decomposition.

Not any effective practical technique preventing protein denaturation via the suppression of TMAO decomposition has existed so far. No approach has existed, except for TMAO removal by water-wash in water as much as possible.

By the technique, TMAO decomposition is suppressed, to suppress protein denaturation, even at a low TMAO concentration (1 to 30 mmol/kg TMAO concentration) or at a high TMAO concentration (30 to 200 mmol/kg TMAO concentrations).

So as to put fish meat at a readily oxidizable state, effectively, the fish meat is agitated at a state such that salt-soluble proteins therein can be dissolved in salts added. The salts added are at an amount of 0.01 to 5 %, preferably 0.1 to 3 % to fish meat defined 100 %.

Salts to be added so as to render fish meat readily oxidizable are for example sodium chloride, potassium chloride, sodium carbonate, sodium bicarbonate, sodium pyrophosphate, sodium metaphosphate, sodium dihydrogen phosphate, disodium hydrogen phosphate, trisodium phosphate, potassium carbonate, sodiumsuccinate, andsodiumgluconate. Preferably, edible salt can be used.

So as to suppress TMAO decomposition, oxidation of fish meat as well as dilution of fish meat with addition of water, oils and fats, soybean protein, starch, various extracts and others is effective.

In accordance with the invention, suppression of freezing denaturation means that the level of protein denaturation during storage under freezing is low, namely the change of the salt solubility of fish meat proteins over time is low, that fish meat keeps a gel forming ability and the change thereof over time is small. Generally, furthermore, the suppression of freezing denaturation means that the amounts of the substances (DMA, FA) generated through TMAO decomposition during storage under freezing are decreased in a suppressive manner. Specifically, fish meat still retains its gel forming ability after one-month storage at -20°C; and/or the amounts of DMA and FA generated through TMAO decomposition are individually below 3 mmol/fish meat kg; and/or the salt solubility as one marker of the non-modified level of proteins is above 20 %. The level of protein solubility during the salt addition and kneading process can be measured by using the decrement ratio of the Mg-ATPase activity of myofibril in 0.1M KCl solution as a marker. It is required that theMG-ATPase activity after the salt addition and kneading process is below 95 % of the activity before the salt addition and kneading process.

Fish meat with suppressed freezing denaturation is produced by adding salt to the raw material fish meat for agitation to oxydize and solubilize salt-soluble proteins therein and subsequently adding one or more cryoprotectants; otherwise, the fish meat is produced by adding salt and one or more cryoprotectants to the raw material fish meat, more specifically by adding edible salt and sugar, or edible salt, sugar and sweet sake for agitation to oxydaize and solubilize the salt-soluble proteins of the raw material fish meat. Fish meat with addition of edible salt, sugar and sweet sake can be diluted with water and other food materials.

The fish meat with suppressed freezing denaturation in accordance with the invention is used as a raw material of fish paste products. The fish meat can be used in absolutely the same manner as frozen surimi currently used as a raw material of fish paste. Because water-soluble proteins which are removed in case of frozen surimi still remain, the resulting fish meat has enriched umami flavor. Hence, no supplement of components with umami flavor such as sodium glutamate is necessary therefor.

Fish paste products include for example plain fish paste cake (kamaboko), fried fish paste cake, boiled fish paste cake, grilled or boiled fish paste cake in the form of bamboo shoot, crab meat-like fish paste cake, deep-fried fish paste cake, fish meat ham, sausage, and cake of pounded fish.

### Actions

In accordance with the invention, cryoprotectants are added to a raw material non-water-washed or water-washed at low level minced fish meat or the dehydrated meat thereof, followed by mixing the resulting mixture together under agitation, as it is or after edible salt is added, to suppress TMAO decomposition through oxidation and suppress protein denaturation. In such manner, non-water-washed or water-washed at low level fish meat with high freezing resistance and a high gel forming ability can be prepared, which provides a frozen raw material for fish paste products.

TMAO decomposition in non-water-washed fish meat can be suppressed by adding and mixing edible salt and sugar, or edible salt, sugar and sweet sake to non-water-washed or water-washed at low level fish meat under agitation. Generation of FA and DMA can be suppressed by adding and mixing edible salt and sugar, or edible salt, sugar and sweet sake to TMAO-containing fish meat under agitation. Addition of all of edible salt, sugar and sweet sake is more effective. Furthermore, fish meat with addition of edible salt, sugar and sweet sake is mixed and diluted with water and other food materials under agitation, to thereby suppress the generation of FA and DMA more as well. Thus, freezing resistance and the suppression of fishy smell can be attained.

Herein, the mechanism of the generation of FA and DMA from TMAO is briefly described. As it is well known in case of cods, TMAO contained in the muscle reacts with biological iron and water in the fish meat in reducing environment, to be converted en route a Schiff base into FA and DMA [Formula 1; C. Castell, B. Smith, W. Neal. J. Fish Res. Bd. Can., 28, 1-5 (1971)].

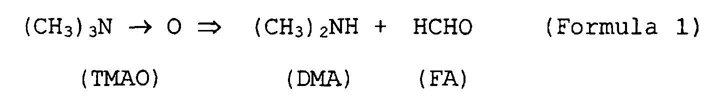

The reaction proceeds in the form of a simple chemical reaction. However, TMAO decomposition enzymes exist in muscle, so the decomposition via enzymatic reactions exists as well. Although TMAO decomposition in fish muscle proceeds above 0°C or below 0°C, TMAO decomposition under freezing mostly occurs through non-enzymatic decomposition. In any way, the generated FA is so highly reactive that cross-linking reactions thereof with amino acids, peptides and proteins rapidly decrease the salt solubility of fish meat proteins, which causes the denaturation of fish meat proteins. Additionally, DMA generates fishy smell, causing marked reduction of the commercial value.

A report tells that reducing environment and iron are required for TMAO decomposition [K. L. Parkin and H. O. Hultin, J. Biochem., 100, 77-86 (1986)].

Reece (J. Sci. Food Agric. 1983, 34, 1108-1112) has found that when the minced fish meat of Gadus morhua is stored under freezing, TMAO decomposition is suppressed on the surface of the minced fish meat, suggesting that oxygen inhibits the activity of TMAO decomposition enzymes. Further, George Boer, Owen Fennema et al. (J. Food Sci 1989, 54, 6, 1524-1529) also observed that the denaturation of fish meat during freezing is decreased by agitation and speculatively report that the activity of TMAO decomposition enzymes can partially be inhibited by agitation. All of these reports describe that the TMAO decomposition may possibly be ascribed to TMAO decomposition enzymes and that oxygen inhibits the enzyme activity.

Despite of these reports not only research works about the suppression of FA generation with oxygen but also any development for the practical application have not been made yet. The reason is that because minced fish meat and fillet contain a high content of lipid, under simple storage in the co-existence of oxygen, lipid oxidation such as oxidation of fats and oils proceeds, with the resultant oxidative denaturation of proteins, possibly leading to quality deterioration [Kenichi Kawasaki, Toru Oizumi, Foods Food Ingredients J. Jpn., 175, 92-98 (1998)].

In accordance with the invention, a frozen product of non-water-washed or water-washed at low level fish meat, which still retains satisfactory properties as a raw material of fish paste products, is established by suppressing TMAO decomposition in fish meat through fish meat oxidation, to thereby suppress protein denaturation with FA to reduce the fishy smell of DMA and simultaneously recover a synergistic effect on the prevention of the denaturation by using a technique suppressing freezing denaturation of proteins with sugar, sugar alcohol and sweet sake in combination.

The details of the invention are described in Examples. The invention is not limited to these Examples.

### Example 1

### Oxygenation of biological iron-containing substances and TMAO decomposition

### [Method]

To myoglobin as the main component of iron-containing materials in muscle and myoglobin oxygenized with oxygen purging (oxymyoglobin) were individually added TMAO of 50 mM, 0.1 mM KCl-Tris buffer, and 1 mM cysteine, for reaction at 25°C, to assay DMA generated over time via TMAO decomposition.

As to FA assay, FA is generated at an equal molar amount to that of DMA during TMAO decomposition. In the present specification, therefore, DMA is assayed in any case and the amount thereof is designated the amount of FA. DMA assay was done by the copper-dithiocarbamate method according to the method of Dyer, Mounsey et al. (J. Fish Res, Bd. Can., 6, 359-367 1945).

### [Results]

The results are shown in Fig. 1.

Based on the results, it was verified that although myoglobin promoted TMAO decomposition, oxymyoglobin as oxygenized never promoted TMAO decomposition.

### Example 2

### [Method]

Minced fish meat was prepared, using Alaska Pollacks (Theragra chalcogram). As Sample 1, the minced fish meat was rapidly frozen as it was. To the minced fish meat were added salt at 1 %, sugar at 10 % and sweet sake at 1 %, and the resulting mixture was mixed together with a silent cutter for 3 minutes and was rapidly frozen as Sample 2. To the minced fish meat were added salt at 1 %, sugar at 10 % and sweet sake at 1 %, and the resulting mixture was mixed together with a silent cutter for 10 minutes and was rapidly frozen as Sample 3. After storage at -20°C for 3 months, the amount of FA and the content of reducing type glutathione (GSH) were assayed.

### [Results]

The results are shown in Table 1.

**Table 1**

| | DMA (mmol/fish meat kg) | GSH (nmol/g) |
|---|---|---|
| Sample 1 | 2.97 | 89.49 |
| Sample 2 | 1.81 | 81.23 |
| Sample 3 | 0.40 | 71.00 |

The results clearly show that TMAO decomposition is suppressed in Sample 3 to a GSH content of about 80 % of that of Sample 1, indicating that GSH as a biological reducing agent has been oxidized.

### Example 3

Skinless fillets were prepared from Alaska Pollacks (Theragra chalcogram) which are about 40 hours after catching. Subsequently, non-water-washed fish meat at a water content of 83.5 % was prepared with a meat collector machine, which was then prepared with a screw press dehydration machine into the dehydrated meat of the non-water-washed fish meat at a water content of 80.0 %.

In case of Sample 1, the resulting dehydrated non-water-washed fish meat was rapidly frozen as it was. In case of Sample 2, salt at 1 %, sugar at 10 %, sweet sake at 1 % and water at 5 % were added to 100 % of the fish meat, which was then charged in a silent cutter for about 10-min agitation, followed by rapid freezing. In case of Samples 3 and 4, the amount of water added to Sample 2 was modified to 10 % and 20 %, respectively, to prepare the Samples 3 and 4 in the same manner as in Sample 2. As to storage under freezing, these samples were under cruel storage at -10°C for 3 weeks to evaluate TMAO decomposition, namely the amount of DMA generated and the gel strength.

Frozen fish meat is stored generally at -20 to -25°C, but at the present test, frozen meat was stored at -10°C to evaluate the long-term storability under freezing for a short period. Cruel test is a test method for examining storability for a short period, comprising storage under conditions more cruel than those of general storage. Comparison using the FA amount as a marker has already established a verification such that frozen fish meat under storage at -10°C for 2 weeks is at nearly the same denaturation level as that of frozen fish meat under storage at -20°C for one year. Taking account of storage at - 20°C for one year or longer, such fish meat was evaluated up to week 3 at the cruel test.

Gel forming ability was evaluated by preparing a directly heated surimi gel. In other words, to fish meat at semi-thawed state (at about -2 to -1°C) was added salt at 2 %, for the salt addition and kneading process to solubilize proteins with a silent cutter for about 10 minutes. Subsequently, the frozen meat was charged in a vinylidene chloride tube of a 48-mm folding diameter, for heating at 90°C for 40 minutes to prepare the surimi gel. The gel strength was measured by a process of cutting the surimi gel in 2.5 cm. The cross section was squeezed with a 5-mm spherical plunger at a rate of 1 mm/second until the surimi gel was broken, to calculate the break load multiplied by the distance to the break, which expresses the gel strength.

### [Results]

The results are shown in Table 2.

**Table 2**

| Sample | Pre-storage | | Post-storage | |
|---|---|---|---|---|
| | DMA (mmol/fish meat kg) | gel strength (g·cm) | DMA (mmol/fish meat kg) | gel strength (g·cm) |
| 1 | 1.72 | 202 | 6.20 | measurement impossible |
| 2 | 0.24 | 442 | 0.66 | 415 |
| 3 | 0.24 | 379 | 0.50 | 363 |
| 4 | 0.23 | 254 | 0.47 | 244 |

The results show that DMA generation was suppressed in the fishmeat with additionof water for dilution. Additionally, the gel strength was reduced reasonably as the water content was higher. However, sufficient gel forming ability was retained.

### Example 4

### [Method]

After Alaska pollacks (Theragra chalcogram) were processed into fillet, the fillet was subjected to a mincing process. The resulting minced meat was water-washed in water twice according to general methods followed by dehydration. Sample 1 was prepared by adding salt at 2.25 % and sugar at 10 % to the surimi, which was then agitated with a silent cutter for 3 minutes. Sample 2 was prepared by adding the same auxiliary raw materials followed by 10-min agitation. After these samples were individually rapidly frozen and stored at -10°C for 3 weeks, the amount of DMA was assayed, while the properties of proteins were assessed, using as a marker the solubility of salt-soluble proteins. As to the method, the solubility of actomyosin occupying half or more of fish meat proteins in a salt buffer solution [0.5M NaCl 20 mM Tris-HCl (pH 7.5)] was evaluated.

### [Results]

The results are shown in Table 3.

**Table 3**

| | After storage at -10°C for 3 weeks | |
|---|---|---|
| | amount of DMA (mmol/fish meat kg) | salt solubility (%) |
| Sample 1 | 0.68 | 28 |
| Sample 2 | 0.43 | 41 |

The results show that TMAO decomposition is suppressed by sufficient agitation of the surimi (water-washed fish meat) for oxidation of the components in the fish meat, together with the suppression of protein denaturation.

### Example 5

The suppression of TMAO decomposition with sugar and sweet sake was examined and evaluated.

### [Method]

The minced fish meat of Alaska pollacks (Theragra chalcogram) were prepared by processing the fish into fillet and dehydrating the fillet to a water content of about 81 % with a screw press. Using the minced fish meat, the following five types were prepared: 1. the minced fish meat rapidly frozen as it was; 2. a type prepared by adding edible salt at 3 % to the fish meat and mixing together the resulting fish meat for 10 minutes, and rapidly freezing the fish meat; 3. a type prepared by adding edible salt at 3 % to the fish meat and mixing together the resulting fish meat for 10 minutes, adding xylose at 2 % to the fish meat and rapidly freezing the fish meat; 4. a type prepared by adding edible salt at 3 % to the fish meat and mixing together the resulting fish meat for 10 minutes, adding sucrose at 10 % to the fish meat and rapidly freezing the fish meat; and 5. a type prepared by adding edible salt at 3 % to the fish meat and mixing together the resulting fish meat for 10 minutes, adding sweet sake at 3 % to the fish meat and rapidly freezing the fish meat.

The TMAO decomposition, namely the amount of FA generated in the prepared samples was assessed at cruel tests over time.

The cruel tests were done during storage under freezing at -10°C for 2 weeks and 4 weeks.

### [Results]

The amount of DMA (in unit: mmol/fish meat kg) in the individual samples before and after such storage is shown in Table 4.

The results in Table 4 apparently indicate that addition of the salt, sugar such as xylose or sucrose and sweet sake to the minced fish meat enables the suppression of TMAO decomposition.

**Table 4**

| Sample No. | | Immediately after preparation | -10°C for 2 weeks | -10°C for 4 weeks |
|---|---|---|---|---|
| 1 | minced fish meat | 1.72 | 3.30 | 7.27 |
| 2 | salt | 2.20 | 4.35 | 6.54 |
| 3 | salt + xylose | 1.28 | 3.08 | 5.15 |
| 4 | salt + sucrose | 0.48 | 0.78 | 2.04 |
| 5 | salt + sweet sake | 0.38 | 2.29 | 3.33 |

### Example 6

### Relation between suppression of TMAO decomposition and protein properties through combination of edible salt, sucrose and sweet sake

### [Method]

In the same manner as in Example 5, minced fish meat was prepared from Alaska pollacks (Theragra chalcogram). Sample 1 was minced fish meat rapidly frozen as it was. Sample 2 was minced fish meat with addition of sucrose at 10 % and agitation for 10 minutes with a silent cutter. Sample 3 was minced fish meat with addition of sucrose at 10 % and sweet sake at 1 % and agitation for 10 minutes with a silent cutter. Sample 4 was minced fish meat with addition of edible salt at 3 % and agitation for 10 minutes with a silent cutter and with further addition of sucrose at 10 % and sweet sake at 1 % and subsequent agitation for 5 minutes. The prepared meat types were rapidly frozen and stored under cruel conditions at -10°C, to measure the amount of formaldehyde and evaluate protein properties under freezing over time.

The protein properties were measured, using as a marker the salt solubility of salt-soluble proteins. As to the method, the solubility of actomyosin occupying half or more of fish meat proteins in a salt buffer solution [0.5M NaCl 20 mM Tris-HCl (pH 7.5)] was evaluated.

### [Results]

Table 5 shows the additives and DMA amount (in unit: mmol/fishmeat kg), while Table 6 shows the relation (in unit: %) between an additive and the salt solubility of salt-soluble proteins.

As apparently shown in Tables 5 and 6, TMAO decomposition was strongly suppressed in the samples with addition of all of salt, sucrose and sweet sake and protein denaturation was suppressed by salt addition as well.

**Table 5**

| Sample # | | Initial | -10°C for 2 weeks | -10°C for 4 weeks |
|---|---|---|---|---|
| 1 | minced fish meat | 1.67 | 3.56 | 4.22 |
| 2 | minced fish meat + sucrose | 0.99 | 1.68 | 2.21 |
| 3 | minced fish meat + sucrose + sweet sake | 0.81 | 1.25 | 1.42 |
| 4 | minced fish meat + salt + sucrose + sweet sake | 0.59 | 0.84 | 1.00 |

**Table 6**

| Sample # | | Initial | -10°C for 2 weeks | -10°C for 4 weeks |
|---|---|---|---|---|
| 1 | minced fish meat | 16 | - | - |
| 2 | minced fish meat + sucrose | 41 | 35 | 28 |
| 3 | minced fish meat + sucrose + sweet sake | 30 | 29 | 26 |
| 4 | minced fish meat + salt + sucrose + sweet sake | 37 | 33 | 27 |

### Example 7

Relation between sugar type and suppression of TMAO decomposition

### [Method]

In the same manner as in Example 5, minced fish meat was prepared from Alaska pollacks (Theragra chalcogram). Sample 1 was minced fish meat rapidly frozen as it was. Sample 2 was minced fish meat with addition of edible salt at 3 % and agitation with a silent cutter for 10 minutes and further addition of sorbitol at 10 % and sweet sake at 1 % and subsequent agitation for 5 minutes. The prepared fish paste was rapidly frozen. Sample 3 and Sample 4 were prepared after sucrose in Sample 2 was replaced for sorbitol and treharlose, respectively. The prepared samples were stored under cruel conditions at -10°C for 4 weeks, to measure and evaluate TMAO decomposition over time.

### [Results]

The results are shown in Table 7. As apparently shown in Table 7, the suppressive effect of TMAO decomposition was observed with a slight difference, depending on the sugar type.

**Table 7**

| Sample # | | Initial | -10°C for 2 weeks | -10°C for 4 weeks |
|---|---|---|---|---|
| 1 | minced fish meat | 1.72 | 3.30 | 7.27 |
| 2 | minced fish meat + salt + sucrose + sweet sake | 0.82 | 1.67 | 2.62 |
| 3 | minced fish meat + salt + sorbitol + sweet sake | 0.80 | 1.77 | 3.62 |
| 4 | minced fish meat + salt + trehalose + sweet sake | 0.76 | 1.82 | 3.73 |

### Example 8

### Influence of dehydration of minced fish fillet on fish paste products

### [Method]

After adding salt at 3 % separately to minced fish meat and the dehydrated meat of minced fish meat for the salt addition and kneading process to solubilize proteins with a silent cutter for about 10 minutes, water was added to 20 %, for further agitation for about 10 minutes, to prepare fish pastes. A directly heated surimi gel was prepared by charging a fish paste in a vinylidene chloride tube of a 48-mm folding diameter for heating at 90°C for 40 minutes. A suwari surimi gel was prepared by gelatinizing a fish paste charged in the same manner at 30°C for 60 minutes under heating, and heating the resulting product at 90°C for 40 minutes. The water retentivity and gel strength of the prepared surimi gel were measured and evaluated.

The water retentivity was expressed as the amount of drip flowing out by centrifugation of the prepared surimi gel cut into fine pieces of about 5 mm at 3,000 rpm for 10 minutes, per water content of the product.

The gel strength (sometimes abbreviated as "GS" hereinafter) was expressed as a multiplication of the break load (w value: g) and the distance (L value: cm) to the break when the product was cut in 2.5-cm pieces and the cross section was squeezed with a 5-mm spherical plunger at a rate of 1 mm/sec until the product was broken.

### [Results]

The results are shown in Table 8 (properties of fish paste) and Table 9 (physico-chemical properties of surimi gel). As apparently shown in these individual tables, the results show that the dehydrated minced fish meat has higher water retentivity and gel strength than the minced fish meat even when water had been added to adjust the water content to that of the not-dehydrated minced fish meat.

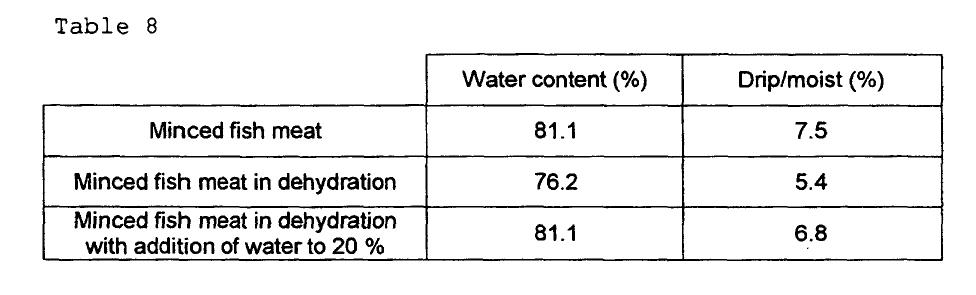

**Table 9**

| | direct heated surimi gel | | | Suwari surimi gel | | |
|---|---|---|---|---|---|---|
| | W value (g) | L value (cm) | GS (g.cm) | W value (g) | L value (cm) | GS (g.cm) |
| Minced fish meat | 193 | 0.97 | 188 | 289 | 1.10 | 317 |
| Minced fish meat in dehydration | 482 | 0.92 | 442 | 707 | 1.14 | 809 |
| Minced fish meat in dehydration with addition of water to 20 % | 298 | 1.11 | 331 | 457 | 1.33 | 606 |

### Example 9

### [Method]

After Alaska pollacks (Theragra chalcogram) were processed into fillet, skin was removed from the fillet to recover the fish meat to prepare minced fish meat. The prepared minced fish meat was dehydrated with a screw press to a water content of about 81 %, which was then subjected to the following tests.

Sample 1 was prepared by adding sucrose at 10 %, sweet sake at 1 % and salt at 1 % to the prepared fish meat, subsequently agitating the resulting fish meat with a silent cutter for one minute and rapidly freezing the meat.

Sample 2 was prepared by adding sucrose at 10 %, sweet sake at 1 % and salt at 1 % to the prepared fish meat, subsequently agitating the resulting fish meat with a silent cutter for 10 minutes and rapidly freezing the meat.

The prepared samples were evaluated of TMAO decomposition under cruel storage, namely the amount of FA generated and the gel strength. The gel strength was evaluated by preparing a directly heated surimi gel. Specifically, salt was added at 2 % while the fish meat was at semi-thawed state (about -2 to -1°C), for agitation with a silent cutter for about 10 minutes; then, the resulting meat was charged in a vinylidene chloride tube of a 48-mm folding diameter for heating at 90°C for 40 minutes, followed by cooling in running water. As to the measurement method, a sample was cut into 2.5-cm pieces, and the cross section was squeezedwith a 5-mm spherical plunger at a rate of 1 mm/second until the sample was broken. The gel strength was expressed as a multiplication of the break load and the distance to the break.

### [Results]

The results are shown in Table 10. The results show that the sample sufficiently agitated after salt addition and salt-soluble proteins were sufficiently dissolved, had a small decrease of the gel strength because TMAO decomposition during storage under freezing was suppressed therein.

**Table 10**

| Sample No. | Agitation period | FA concentration (mmol/kg) | | Gel strength (g.cm) | |
|---|---|---|---|---|---|
| | | initial | -10°C, 3 wks | initial | -10°C, 3 wks |
| 1 | one minute | 0.28 | 1.56 | 591 | 416 |
| 2 | 10 minutes | 0.29 | 0.98 | 607 | 535 |

### Example 10

### Relation between the amount of sugar or sweet sake added and suppression of TMAO decomposition

### [Method]

After Alaska pollacks (Theragra chalcogram) were processed into fillet, skin was removed from the fillet to recover the fish meat to prepare minced fish meat. The prepared minced fish meat was dehydrated with a screw press to a water content of about 81 %, which was then subjected to the following tests.

To the prepared fish meat was added edible salt at 3 %, which was then agitated with a silent cutter for 10 minutes, followed by addition of individual additives shown in Table 11 and rapid freezing.

The prepared samples were stored under cruel conditions at -10°C for 4 weeks, to evaluate TMAO decomposition, namely the amount of FA generated.

### [Results]

Table 12 shows the relation between the type and amount of cryoprotectants and TMAO decomposition.

The results in Table 12 show that TMAO decomposition was suppressed by addition of edible salt to the minced fish meat for agitation to oxydize and solubilize salt-soluble proteins followed by addition of sugar and sweet sake.

**Table 11**

| Sample No. | Cryoprotectants |
|---|---|
| 1 | none |
| 2 | sucrose at 5 % |
| 3 | sucrose at 20 % |
| 4 | sweet sake at 1 % |
| 5 | sweet sake at 5 % |
| 6 | sucrose at 10 % + sweet sake at 1 % |
| 7 | sucrose at 10 % + sweet sake at 5 % |

**Table 12**

| Sample No. | Amount of FA generated | |
|---|---|---|
| | initial | -10°C, 4 wks |
| 1 | 2.2 | 6.54 |
| 2 | 1.11 | 3.8 |
| 3 | 0.78 | 1.26 |
| 4 | 0.97 | 2.79 |
| 5 | 0.81 | 2.28 |
| 6 | 0.59 | 1 |
| 7 | 0.6 | 0.9 |

### Example 11

### Quality of fish paste product prepared from fish meat with suppressed TMAO decomposition

### [Method]

Sample 1 was prepared as follows. From Alaska pollacks (Theragra chalcogram), minced fish meat was prepared in the same manner as in Example 5. To the prepared minced fish meat was added salt at 1 %, followed by mixing with a silent cutter for 10 minutes and subsequent addition of sucrose at 10 % and sweet sake at 1 %. The resulting mixture was mixed together for 5 minutes and then frozen.

After storage under freezing at -20°C for 2 months, salt, sucrose, starch and seasonings and the like were added for mixing with a silent cutter, followed by molding and deep frying in oil to prepare a deep-fried fish paste cake.

As Sample 2, a general commercially available product was purchased and evaluated.

### [Results]

The qualities of the deep fried fish paste cakes, Samples 1 and 2, are shown in Table 13.

The results in Table 13 apparently show that the deep fried fish paste cake prepared from the minced fish meat with suppressed TMAO decomposition was at a longer break distance and with smoother touch, than those of the deep fried fish paste cake prepared from the frozen surimi for current use.

**Table 13**

| | Water content (%) | | pH | Drip/water content (%) | Gel strength | |
|---|---|---|---|---|---|---|
| | | | | break load (g) | break distance (cm) | gel strength (g·cm) |
| #1 | 69.4 | 7.28 | 3.6 | 466 | 1.14 | 531 |
| #2 | 69.3 | 7.06 | 15.2 | 492 | 1.06 | 522 |

### Industrial Applicability

The production yield of fish meat protein as a raw material of fishery food products can be elevated greatly, together with the effective utilization of the fishery resource. While fish meat protein can retain the flavor of fish meat, the raw material with wide applicability can be provided. Owing to non-water-wash or low level water-wash, water disposal is markedly reduced, involving environmental improvement compared with the related art. Because such fish meat can still retain natural flavor, the amount of food additives and artificial flavors to be added for the application to processed products can be reduced. Hence, the supply of healthy foods can be attained.

## Claims

1. A frozen non-water-washed or water-washed at low level fish meat made from minced fish meat or the dehydrated meat of minced fish meat, to which have been added one or more cryoprotectants and in which the decomposition of trimethylamine-N-oxide is suppressed through oxidation.

2. A frozen non-water-washed or water-washed at low level fish meat according to claim 1, where the oxidation method includes agitation of fish meat to put the fish meat in contact to air or oxygen.

3. A frozen non-water-washed or water-washed at low level fish meat according to claim 2, where salts are added during agitation.

4. A frozen non-water-washed or water-washed at low level fish meat according to any one of claim 1, 2 or 3, where sugar and/or sugar alcohol is used as the cryoprotectants.

5. A frozen non-water-washed or water-washed at low level fish meat according to any one of claim 1, 2 or 3, where sugar and/or sugar alcohol and sweet sake are used as the cryoprotectants.

6. A frozen non-water-washed or water-washed at low level fish meat according to any one of claims 1 to 5, where an agent suppressing the decomposition of trimethylamine-N-oxide is used as the cryoprotectants.

7. A frozen non-water-washed or water-washed at low level fish meat according to any one of claims 1 to 6, where water or a foodmaterial is additionally added to dilute the fish meat, thereby suppressing the freezing denaturation.

8. A fish paste product made from a frozen non-water-washed or water-washed at low level fish meat according to any one of claims 1 to 7 as the raw material.
